# EUROPEAN PATENT APPLICATION

(11) **EP 4 183 763 A1**
(43) Date of publication of application: **24.05.2023**
(21) Application number: 21208974.2
(22) Date of filing: 18.11.2021
(51) Int. Cl.: C05C 9/00, C05D 9/02, C05F 11/00, C05G 5/30

(54) **FERTILIZER COMPOSITION INCLUDING MULTI-MICRONUTRIENTS**

(71) Applicant: SABIC Global Technologies, B.V., 4612 PX Bergen op Zoom (NL)
(72) Inventor: KORIPELLY, Rajamalleswaramma, Bangalore (IN); BAG, Nilkamal, Bangalore (IN); R, Ganeshan, Bangalore (IN); BIRDAR, Satish C., Bangalore (IN); AL ROHILY, Khalid Marshod, Riyadh (SA)
(74) Representative: Dehns

(57) **Abstract**

A fertilizer granule includes: a core including a fertilizer component; and a coat including a first micronutrient including organic zinc (Zn) complex and an inorganic Zn compound, and a second micronutrient including a metal that is different from metal in the first micronutrient. The coat forms a coating on an outer surface of the core. A method of making a fertilizer granule includes: forming or providing a core including a fertilizer component; and forming a coat on an outer surface of the core to form the fertilizer granule, wherein the coat includes at least one coating, and wherein the coat includes a first micronutrient including an organic zinc (Zn) complex and an inorganic Zn compound, and a second micronutrient including a metal that is different from metal in the first micronutrient.

## Description

### FIELD OF THE DISCLOSURE

The present disclosure relates to fertilizer granules and fertilizer compositions including the granules, and in particular to coated fertilizer granules including a plurality of micronutrients.

### BACKGROUND OF THE DISCLOSURE

Nutrient deficiency in soils is a common worldwide problem. Causes for nutrient deficiency include intensive cropping practices, adoption of high yield crop varieties, enhanced production of crops on marginal soils, increased use of chemical fertilizers, decreased use of manures, composts, and crop residues and cultivation on soils that are inherently low in micronutrients reserves.

Soil nutrient deficiencies result in reduced crop yield. The deficiencies may be addressed by including micronized powder forms of micronutrients in fertilizers such as urea, which is a major fertilizer that is required by many crops in split applications. Availability of micronutrients will be as per the split applications along with urea, which also can reduce the losses of micronutrients or its unavailability to the plants.

Conventional fertilizer compositions include an NPK (nitrogen, phosphorus, and potassium) fertilizer base with inorganic salt micronutrients. Not much attention is paid to the particle size of the micronutrients. The micronutrients blended with fertilizers are applied during pre-planting time. As micronutrients are applied to the soil in a small quantity, they have conventionally been applied with other macronutrients. Multi-micronutrient solutions have not previously been used, however.

These and other shortcomings are addressed by aspects of the present disclosure.

### SUMMARY

Aspects of the disclosure relate to a fertilizer granule including: a core including a fertilizer component; and a coat including a first micronutrient including organic zinc (Zn) complex and an inorganic Zn compound, and a second micronutrient including a metal that is different from metal in the first micronutrient. The coat forms a coating on an outer surface of the core.

Additional aspects of the disclosure relate to methods of making a fertilizer granule including: forming or providing a core including a fertilizer component; and forming a coat on an outer surface of the core to form the fertilizer granule. The coat includes at least one coating, and the coat includes a first micronutrient including an organic zinc (Zn) complex and an inorganic Zn compound, and a second micronutrient including a metal that is different from metal in the first micronutrient.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

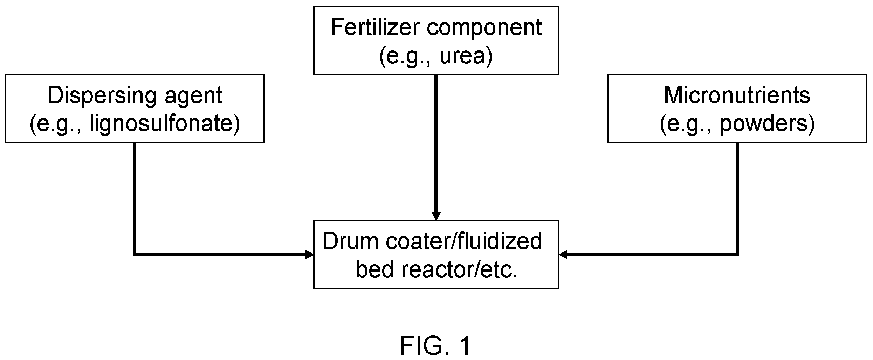

FIG. 1 is a schematic diagram of a method for forming a fertilizer composition according to aspects of the disclosure.

### DETAILED DESCRIPTION

Urea is a popular and inexpensive source of nitrogen nutrient to a plant. Accordingly, urea may be used as a vehicle to transfer other micronutrients along with it. In the present disclosure urea or another core fertilizer component is coated with combinations of micronutrients including, for example, one or more of zinc-boron, zinc-boron-molybdenum, zinc-molybdenum, boron, and molybdenum. The micronutrient coating may be in the form of micronized powder. In some aspects a dispersing agent such as lingo sulfonate solution is used to first coat the core fertilizer component and is followed by coating the micronized powder form of the micronutrients on the core.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a fertilizer component" includes mixtures of two or more fertilizers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Fertilizer Granules

Aspects of the disclosure relate to a fertilizer granule including: (1) a core including a fertilizer component; and (2) a coat including (a) a first micronutrient including organic zinc (Zn) complex and an inorganic Zn compound, and (b) a second micronutrient including a metal that is different from metal in the first micronutrient. The coat forms a coating on an outer surface of the core.

In some aspects the second micronutrient includes boron, molybdenum, manganese, copper, iron, or a combination thereof. In particular aspects the second micronutrient does not include zinc.

The fertilizer component may include in certain aspects urea, nitrogen-phosphorous (NP), nitrogen-phosphorous-potassium (NPK), or a combination thereof. In a specific aspect the fertilizer component includes urea.

The organic Zn complex may include a chelated Zn complex. In further aspects the chelated Zn complex includes Zn chelated with a chelator including ethylenediaminetetraacetic acid (EDTA), nitrilotriacetic acid (NTA), hydroxyethylenediaminetriacetic acid (HEDTA), diethylenetriaminepentaacetic acid (DTPA), 1,2-diaminocyclohexane tetraacetic acid (DCTA), ethylenediamine di-o-(hydroxyphenylacetic) acid (EDDHA), ethylene glycol bis(aminoethylether) tetraacetic acid, or dihydroxyethyl glycine (DHEG), or a salt thereof, or any combination thereof. In a particular aspect the organic Zn complex includes Zn chelated with EDTA.

In other aspects the inorganic Zn compound includes ZnO, ZnSO₄, ZnCO₃, Zn(NO₃)₂, ZnCl₂, or any combination thereof. In specific aspects the inorganic Zn compound includes ZnO, ZnSO₄, or a combination thereof.

The coat on the fertilizer component includes at least one coating layer. In some aspects the organic Zn complex, the inorganic Zn compound and the second micronutrient are located on the at least one coating layer. In some aspects the coat includes a plurality of coating layers, and one or more of the organic Zn complex, the inorganic Zn compound and the second micronutrient are located on separate coating layers.

In certain aspects one or more of the organic Zn complex, the inorganic Zn compound and the second micronutrient include micronized particles. The micronized particles may have an average diameter of 0.1 µm to 100 µm. The micronutrients may be in the form of micronutrient powders.

In specific aspects the granule includes, based on the weight of the granule: from about 0.01 wt% to about 0.2 wt% of the organic Zn complex; from about 0.05 wt% to about 0.2 wt% of the inorganic Zn compound; and from about 0.01 wt% to about 0.2 wt% of the second micronutrient.

The granule may further include a dispersing agent. The dispersing agent may promote adhesion/sticking of the coat to the core. In some aspects the dispersing agent includes a lignosulfonate compound. The granule may include from about 0.01 wt% to about 0.2 wt% of the dispersing agent in some aspects. In further aspects the granule includes from about 0.01 wt% to about 0.1 wt% of the dispersing agent, or about 0.06 wt% of the dispersing agent.

In particular aspects the organic zinc (Zn) complex includes (NH₄)₂ZnEDTA (Diammonium [[N,N'-ethylenebis[N-(carboxylatomethyl)glycinato]](4-)-N,N',O,O',ON,ON']zincate(2-)), (Na)₂ZnEDTA (Disodium [[N,N'-ethylenebis[N-(carboxylatomethyl)glycinato]](4-)-N,N',O,O',ON,ON']zincate(2-)), or a combination thereof.

The core may further include an urease inhibitor, and/or a nitrification inhibitor in some aspects. In specific aspects the core includes from about 0.02 wt% to about 0.1 wt% of the urease inhibitor, or from about 0.1 wt% to 1 wt% of the nitrification inhibitor, based on the weight of the core. In a particular aspect the urease inhibitor includes N-(n-butyl) thiophosphoric triamide (NBPT), or the nitrification inhibitor includes dicyandiamide (DCD).

The disclosure further relates to a fertilizer composition including the fertilizer granule described herein.

### Methods of Making Fertilizer Granules

With reference to FIG. 1, aspects of the disclosure further relate to methods of making a fertilizer granule, including: (a) forming or providing a core including a fertilizer component; and (b) forming a coat on an outer surface of the core to form the fertilizer granule. The coat includes at least one coating, and the coat includes a first micronutrient including (1) an organic zinc (Zn) complex and an inorganic Zn compound, and a (2) second micronutrient including a metal that is different from metal in the first micronutrient. The first and second micronutrients may be in the form of micronutrient powders.

The step (b) of forming a coat on the outer surface of the core may be performed in presence of a dispersing agent such as but not limited to a lignosulfonate solution. From about 100 grams to about 2 kg of the dispersing agent (e.g., lignosulfonate solution) may be used per metric ton of the fertilizer component.

In some aspects of the method includes boron, molybdenum, manganese, copper, iron, or a combination thereof. In further aspects of the method the second micronutrient does not include zinc.

The fertilizer component may include urea, NP, NPK, or a combination thereof.

In further aspects the coat is applied to the fertilizer component by mixing the fertilizer component with the first micronutrient, the second micronutrient, and the dispersing agent.

The mixing may be performed in a conventional mixing apparatus such as but not limited to a drum coater or a fluidized bed reactor.

Aspects of the disclosure further relate to a method of fertilizing, including applying the fertilizer granule described herein to at least a portion of a soil, a crop, or the soil and the crop.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A fertilizer granule comprising:
a core comprising a fertilizer component; and
a coat comprising a first micronutrient comprising organic zinc (Zn) complex and an inorganic Zn compound, and a second micronutrient comprising a metal that is different from metal in the first micronutrient,
wherein the coat forms a coating on an outer surface of the core.

Aspect 2. The fertilizer granule according to Aspect 1, wherein the second micronutrient does not comprise zinc.

Aspect 3. The fertilizer granule according to Aspect 1 or 2, wherein the second micronutrient comprises boron, molybdenum, manganese, copper, iron, or a combination thereof.

Aspect 4. The fertilizer granule according to any of Aspects 1 to 3, wherein the fertilizer component comprises urea, nitrogen-phosphorous (NP), nitrogen-phosphorous-potassium (NPK), or a combination thereof.

Aspect 5. The fertilizer granule according to any of Aspects 1 to 4, wherein the organic Zn complex is a chelated Zn complex.

Aspect 6. The fertilizer granule according to Aspect 5, wherein the chelated Zn complex comprises Zn chelated with a chelator comprising ethylenediaminetetraacetic acid (EDTA), nitrilotriacetic acid (NTA), hydroxyethylenediaminetriacetic acid (HEDTA), diethylenetriaminepentaacetic acid (DTPA), 1,2-diaminocyclohexane tetraacetic acid (DCTA), ethylenediamine di-o-(hydroxyphenylacetic) acid (EDDHA), ethylene glycol bis(aminoethylether) tetraacetic acid, or dihydroxyethyl glycine (DHEG), or a salt thereof, or any combination thereof.

Aspect 7. The fertilizer granule according to any of Aspects 1 to 6, wherein the inorganic Zn compound comprises ZnO, ZnSO₄, ZnCO₃, Zn(NO₃)₂, ZnCl₂, or any combination thereof.

Aspect 8. The fertilizer granule according to any of Aspects 1 to 7, wherein the coat comprises at least one coating layer, and the organic Zn complex, the inorganic Zn compound and the second micronutrient are located on the at least one coating layer.

Aspect 9. The fertilizer granule according to any of Aspects 1 to 7, wherein the coat comprises a plurality of coating layers, and one or more of the organic Zn complex, the inorganic Zn compound and the second micronutrient are located on separate coating layers.

Aspect 10. The fertilizer granule according to any of Aspects 1 to 9, wherein one or more of the organic Zn complex, the inorganic Zn compound and the second micronutrient comprise micronized particles.

Aspect 11. The fertilizer granule according to Aspect 10, wherein the micronized particles have an average diameter of 0.1 µm to 100 µm.

Aspect 12. The fertilizer granule according to any of Aspects 1 to 11, wherein the granule comprises, based on the weight of the granule:
from about 0.01 wt% to about 0.2 wt% of the organic Zn complex;
from about 0.05 wt% to about 0.2 wt% of the inorganic Zn compound; and
from about 0.01 wt% to about 0.2 wt% of the second micronutrient.

Aspect 13. The fertilizer granule according to any of Aspects 1 to 12, wherein the granule further comprises a dispersing agent.

Aspect 14. The fertilizer granule according to Aspect 13, wherein the dispersing agent comprises a lignosulfonate compound, and wherein the granule comprises from about 0.01 wt% to about 0.2 wt% of the lignosulfonate compound.

Aspect 15. The fertilizer granule according to any of Aspects 1 to 14, wherein the organic zinc (Zn) complex comprises (NH₄)₂ZnEDTA (Diammonium [[N,N'-ethylenebis[N-(carboxylatomethyl)glycinato]](4-)-N,N',O,O', ON,ON']zincate(2-)), (Na)₂ZnEDTA (Disodium [[N,N'-ethylenebis[N-(carboxylatomethyl)glycinato]](4-)-N,N',O,O',ON,ON']zincate(2-)), or a combination thereof.

Aspect 16. The fertilizer granule according to any of Aspects 1 to 15, wherein the core further comprises an urease inhibitor, and/or a nitrification inhibitor.

Aspect 17. The fertilizer granule according to Aspect 16, wherein the core comprises from about 0.02 wt% to about 0.1 wt% of the urease inhibitor, or from about 0.1 wt% to 1 wt% of the nitrification inhibitor, based on the weight of the core.

Aspect 18. The fertilizer granule according to Aspect 16 or 17, wherein the urease inhibitor comprises N-(n-butyl) thiophosphoric triamide (NBPT), or the nitrification inhibitor comprises dicyandiamide (DCD).

Aspect 19. A fertilizer composition comprising the fertilizer granule according to any of Aspects 1 to 18.

Aspect 20. A method of making a fertilizer granule, comprising:
forming or providing a core comprising a fertilizer component; and
forming a coat on an outer surface of the core to form the fertilizer granule,
wherein the coat comprises at least one coating, and
wherein the coat comprises a first micronutrient comprising an organic zinc (Zn) complex and an inorganic Zn compound, and a second micronutrient comprising a metal that is different from metal in the first micronutrient.

Aspect 21. The method according to Aspect 20, wherein the step of forming a coat on the outer surface of the core is performed in presence of a lignosulfonate solution.

Aspect 22. The method according to Aspect 21, wherein from about 100 grams to about 2 kg of the lignosulfonate solution are used per metric ton of the fertilizer component.

Aspect 23. The method according to any of Aspects 20 to 22, wherein the second micronutrient does not comprise zinc.

Aspect 24. The method according to any of Aspects 20 to 23, wherein the second micronutrient comprises boron, molybdenum, manganese, copper, iron, or a combination thereof.

Aspect 25. The method according to any of Aspects 20 to 24, wherein the fertilizer component comprises urea.

Aspect 26. The method according to any of Aspects 21 to 25, wherein the coat is applied to the fertilizer component by mixing the fertilizer component with the first micronutrient, the second micronutrient, and the lignosulfonate solution.

Aspect 27. The method according to Aspect 26, wherein the mixing is performed in a drum coater or a fluidized bed reactor.

Aspect 28. A method of fertilizing, the method comprising applying the fertilizer granule according to any of Aspects 1 to 19 to at least a portion of a soil, a crop, or the soil and the crop.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Coated fertilizer granules according to aspects of the disclosure were prepared as listed in Table 1. Each formulation was prepared in a drum coater; 600g lignosulfonate per metric ton of urea was used a dispersing/sticking agent during the coating process.

**Table 1 - Coated Urea Compositions**

| **No.** | **Formulations coated on urea** |
|---|---|
| Ex1 | Chelated Zinc (0.025%), micronized zinc (0.11 wt%) and micronized Boron (0.10 wt%) |
| Ex2 | Chelated Zinc (0.05%), micronized zinc (0.11 wt%) and micronized Boron (0.10 wt%) |
| Ex3 | Chelated Zinc (0.025%), micronized zinc (0.086 wt%) and micronized Mo (0.015%) |
| Ex4 | Chelated Zinc (0.05%), micronized zinc (0.11 wt%) and micronized Mo (0.015%) |
| Ex5 | Chelated Zinc (0.025%), micronized zinc (0.11 wt%), micronized Boron (0.10 wt%) and micronized Mo (0.15%) |
| Ex6 | Chelated Zinc (0.05%), micronized zinc (0.11 wt%), micronized Boron (0.10 wt%) and micronized Mo (0.15%) |

Metal content in each composition was determined according to an Inductively Coupled Plasma Optical Emission Spectroscopy (ICP-OES) analysis method. Results were within the standard deviation range for this analysis method.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A fertilizer granule comprising:
a core comprising a fertilizer component; and
a coat comprising a first micronutrient comprising organic zinc (Zn) complex and an inorganic Zn compound, and a second micronutrient comprising a metal that is different from metal in the first micronutrient,
wherein the coat forms a coating on an outer surface of the core.

2. The fertilizer granule according to claim 1, wherein the second micronutrient does not comprise zinc.

3. The fertilizer granule according to claim 1 or 2, wherein the second micronutrient comprises boron, molybdenum, manganese, copper, iron, or a combination thereof.

4. The fertilizer granule according to any of claims 1 to 3, wherein the fertilizer component comprises urea, nitrogen-phosphorous (NP), nitrogen-phosphorous-potassium (NPK), or a combination thereof.

5. The fertilizer granule according to any of claims 1 to 4, wherein the organic Zn complex is a chelated Zn complex.

6. The fertilizer granule according to claim 5, wherein the chelated Zn complex comprises Zn chelated with a chelator comprising ethylenediaminetetraacetic acid (EDTA), nitrilotriacetic acid (NTA), hydroxyethylenediaminetriacetic acid (HEDTA), diethylenetriaminepentaacetic acid (DTPA), 1,2-diaminocyclohexane tetraacetic acid (DCTA), ethylenediamine di-o-(hydroxyphenylacetic) acid (EDDHA), ethylene glycol bis(aminoethylether) tetraacetic acid, or dihydroxyethyl glycine (DHEG), or a salt thereof, or any combination thereof.

7. The fertilizer granule according to any of claims 1 to 6, wherein the inorganic Zn compound comprises ZnO, ZnSO₄, ZnCO₃, Zn(NO₃)₂, ZnCl₂, or any combination thereof.

8. The fertilizer granule according to any of claims 1 to 7, wherein the coat comprises at least one coating layer, and the organic Zn complex, the inorganic Zn compound and the second micronutrient are located on the at least one coating layer.

9. The fertilizer granule according to any of claims 1 to 7, wherein the coat comprises a plurality of coating layers, and one or more of the organic Zn complex, the inorganic Zn compound and the second micronutrient are located on separate coating layers.

10. The fertilizer granule according to any of claims 1 to 9, wherein one or more of the organic Zn complex, the inorganic Zn compound and the second micronutrient comprise micronized particles.

11. The fertilizer granule according to claim 10, wherein the micronized particles have an average diameter of 0.1 µm to 100 µm.

12. The fertilizer granule according to any of claims 1 to 11, wherein the granule comprises, based on the weight of the granule:
from about 0.01 wt% to about 0.2 wt% of the organic Zn complex;
from about 0.05 wt% to about 0.2 wt% of the inorganic Zn compound; and
from about 0.01 wt% to about 0.2 wt% of the second micronutrient.

13. The fertilizer granule according to any of claims 1 to 12, wherein the granule further comprises a dispersing agent.

14. The fertilizer granule according to claim 13, wherein the dispersing agent comprises a lignosulfonate compound, and wherein the granule comprises from about 0.01 wt% to about 0.2 wt% of the lignosulfonate compound.

15. The fertilizer granule according to any of claims 1 to 14, wherein the organic zinc (Zn) complex comprises (NH₄)₂ZnEDTA (Diammonium [[N,N'-ethylenebis[N-(carboxylatomethyl)glycinato]](4-)-N,N',O,O',ON,ON']zincate(2-)), (Na)₂ZnEDTA (Disodium [[N,N'-ethylenebis[N-(carboxylatomethyl)glycinato]](4-)-N,N',O,O',ON,ON']zincate(2-)), or a combination thereof.
